# EUROPEAN PATENT SPECIFICATION

(11) **EP 4 622 394 B1**
(45) Date of publication and mention of the grant of the patent: **29.04.2026**
(21) Application number: 24164334.5
(22) Date of filing: 19.03.2024
(51) Int. Cl.: H05B 45/38, H02M 1/42, H02M 3/156

(54) **LED CONVERTER AND EMERGENCY LED DRIVER**
LED-WANDLER UND NOT-LED-TREIBER
CONVERTISSEUR DE DEL ET PILOTE DE DEL D'URGENCE

(43) Date of publication of application: 24.09.2025
(73) Proprietor: Tridonic GmbH & Co. KG, 6851 Dornbirn (AT)
(72) Inventor: Stainthorpe, Ben, Newcastle upon Tyne NE1 7RU (GB); Dahidah, Mohamed, Newcastle upon Tyne NE1 7RU (GB); Pickert, Volker, Newcastle upon Tyne NE1 7RU (GB); Shukla, Jagjitpati, 6850 Dornbirn (AT); Makwana, Deepak, 6850 Dornbirn (AT)
(74) Representative: Rupp, Christian

(56) References cited:
- CN-U- 213 243 821
- US-A1- 2012 249 102

## Description

### Technical Field

The present disclosure relates generally to the field of lighting technology, and especially to an LED converter and emergency LED driver.

### Background Art

Emergency LED drivers may require a low-power and high-gain DC-DC conversion, such as from a battery voltage of 3.2V to an LED voltage of 10-54V, at high switching frequencies.

One particular example of high-gain conversion involves a tapped-inductor boost topology. This topology requires few components and operates in a relatively simple way.

However, at high output voltages and high switching frequencies, its switch may experience high voltage stresses and switching losses.

State-of-the-art solutions such as additional resonant inductors and capacitors, an additional auxiliary switch (limiting the time the resonant capacitor is used), constant 'off-time' of the switch (limiting the time during which resonance may occur), a combination of a secondary winding switched capacitor clamn and an active clamp (acting to prevent oscillations across the switch), or the like attempt to reduce switching losses to some extent.

CN 213 243 821 U discloses a boost converter with tapped inductor and active side resonant unit forming a resonant unit through resonant inductor and resonant capacitor in parallel.

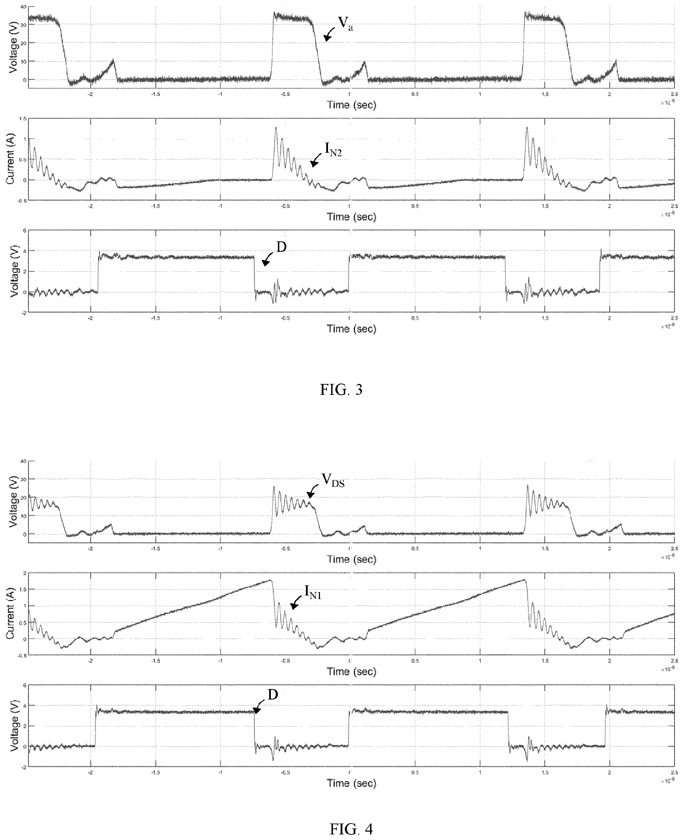

In detail, it discloses (see figure 4) a boost converter topology including a tapped inductance (N1, N2), a first rectifying component (D) arranged in series between an input potential (Vin) and an output potential (Vo) of the converter; a resonant inductance (Lr) and a switch (S2), arranged in series between a tap of the tapped inductance (N1, N2) and a ground potential of the converter; a resonant capacitance (Cr), arranged in parallel to the switch (S2); and a control circuit.

US 2012/249102 A1 discloses another prior art boost converter with tapped inductor and resonant unit forming a resonant unit through a resonant inductor and a resonant capacitor.

### Summary

It is an object to overcome the above-mentioned and other drawbacks.

The invention discloses an LED converter according to the appended claim 1. Dependent claim 7 discloses an emergency LED driver comprising the LED converter of any one of claims 1-6.

The foregoing and other objects are achieved by the features of independent claim 1. Further features of the LED converter are disclosed in the dependent claims.

According to a first aspect, an LED converter is provided. The converter comprises a boost converter topology, including a tapped inductance, a first capacitance and a first rectifying component, arranged in series between an input potential and an output potential of the converter. The converter further comprises a resonant inductance and a switch, arranged in series between a tap of the tapped inductance and a ground potential of the converter. The converter further comprises a resonant capacitance, arranged in parallel to the switch, and a second rectifying component, arranged in series between the tap of the tapped inductance and a common potential of the first capacitance and the first rectifying component. The converter further comprises a control circuit. The control circuit is configured to regulate an input current of the converter in accordance with an input voltage of the converter, a duty cycle signal for the switch and winding turns of the tapped inductance. The control circuit is further configured to generate the duty cycle signal for the switch in accordance with a control error of the input current of the converter and a valley switching in a boundary conduction mode, BCM, operation.

The first rectifying component may comprise a diode.

The second rectifying component may comprise a diode.

The resonant inductance may comprise one or more of: a discrete resonant inductance, and a leakage inductance of the tapped inductance.

The resonant capacitance may comprise one or more of: a discrete resonant capacitance, and a parasitic output capacitance of the switch.

The switch may comprise a metal oxide semiconductor field effect transistor, MOSFET, or a gallium nitride field effect transistor, GaN FET.

According to a second aspect, an emergency LED driver is provided, comprising an LED converter of the first aspect; and a battery, connected between the input potential and the ground potential of the LED converter.

### Advantageous Effects

The present disclosure proposes a converter topology exploiting a natural valley switching operation of a BCM converter to remove a need for an auxiliary switch to achieve Valley Switching as in prior art solutions, in order to feature ZVS soft switching on turn on, while a resonant capacitor is used to mitigate switch off loss, and a switched capacitor clamp to suppress oscillations on the output diode capacitance and absorb some energy from the leakage inductance. All of these features lead to a boost in efficiency at high switching frequencies where high switching losses are present.

Benefits include more flexibility in operation compared to existing topologies, mitigated switching loss, simpler control compared to prior art quasi-resonant solutions, as only one switch is present. The switched capacitor clamp further reduces switching losses and prevents oscillations on anode of output diode which would cause further losses.

This topology helps to maintain efficiency at high switching frequencies or with lossy/high leakage inductors, for the low cost of additional diodes and capacitors. This opens up a potential for low profile designs with smaller inductors/high frequency.

### Brief Description of Drawings

The above-described aspects and implementations will now be explained with reference to the accompanying drawings, in which the same or similar reference numerals designate the same or similar elements.

The drawings are to be regarded as being schematic representations, and elements illustrated in the drawings are not necessarily shown to scale. Rather, the various elements are represented such that their function and general purpose become apparent to those skilled in the art.
FIG. 1 illustrates an emergency LED driver in accordance with the present disclosure;
FIG. 2 illustrates an LED converter in accordance with the present disclosure;
FIGs. 3, 4 illustrate various waveforms of the LED converter of FIG. 2;
FIGs. 5, 6 illustrate efficiency benefits of the switched capacitor clamp circuit and resonant capacitor in the LED converter of FIG. 2; and
FIGs. 7, 8 illustrate the effectiveness of the secondary winding clamp circuit of FIG. 2 in reducing oscillations.

### Detailed Descriptions of Drawings

In the following description, reference is made to the accompanying drawings, which form part of the disclosure, and which show, by way of illustration, specific aspects of implementations of the present disclosure or specific aspects in which implementations of the present disclosure may be used. It is understood that implementations of the present disclosure may be used in other aspects and comprise structural or logical changes not depicted in the figures. The following detailed description, therefore, is not to be taken in a limiting sense, and the scope of the present disclosure is defined by the appended claims.

For instance, it is understood that a disclosure in connection with a described method may also hold true for a corresponding apparatus or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary implementations and/or aspects described herein may be combined with each other, unless specifically noted otherwise.

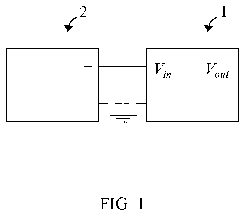

FIG. 1 illustrates the emergency LED driver 1, 2 in accordance with the present disclosure.

The driver 1, 2 comprises an LED converter 1 of the first aspect and a battery 2, connected between an input potential Vᵢₙ and a ground potential of the LED converter 1.

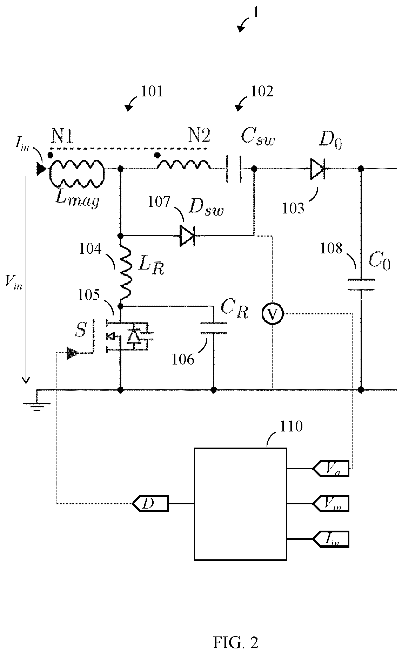

FIG. 2 illustrates the LED converter 1 in accordance with the present disclosure.

The converter 1 comprises a boost converter topology, including a tapped inductance 101 (i.e., a magnetizing inductance L_{mag} split into first and secondary windings N₁, N₂), a first capacitance 102, C_{sw} and a first rectifying component 103, D₀, arranged in series between an input potential Vᵢₙ and an output potential Vₒᵤₜ of the converter 1.

Specifically, the first rectifying component 103, D₀ may comprise a diode.

The converter 1 further comprises a resonant inductance 104, L_{R} and a switch 105, S, arranged in series between a tap of the tapped inductance 101 and a ground potential of the converter 1.

Particularly, the switch 105, S may comprise a metal oxide semiconductor field effect transistor, MOSFET, or a gallium nitride field effect transistor, GaN FET.

The resonant inductance 104, L_{R} may comprise one or more of: a discrete resonant inductance, and a leakage inductance L_{lkg} of the tapped inductance 101.

The converter 1 further comprises a resonant capacitance 106, C_{R} arranged in parallel to the switch 105, S and a second rectifying component 107, D_{sw} arranged in series between the tap of the tapped inductance 101 and a common potential of the first capacitance 102, C_{sw} and the first rectifying component 103, D₀.

The resonant capacitance 106, C_{R} may comprising one or more of: a discrete resonant capacitance, and a parasitic output capacitance Cₒₛₛ of the switch 105, S.

The standard tapped-inductor boost converter topology inherently comprises a leakage inductance L_{lkg} and a parasitic output capacitance Cₒₛₛ. However, it may even be beneficial to increase these values in the form of additional discrete inductors or capacitors.

The second rectifying component 107, D_{sw} may especially comprise a diode.

The converter 1 may further comprise an output capacitance 108, C_{O} for sustained voltage supply of a load such as an LED illumination source.

The converter 1 further comprises a control circuit 110.

The control circuit 110 is configured to regulate an input current Iᵢₙ of the converter 1 in accordance with an input voltage Vᵢₙ of the converter 1, a duty cycle signal D for the switch 105, S and the winding turns N₁, N₂ of the tapped inductance 101.

The control circuit 110 is further configured to generate the duty cycle signal D for the switch 105, S in accordance with a control error e = I_{in,ref} - I_{in,meas} of the input current Iᵢₙ of the converter 1 and a valley switching in a boundary conduction mode, BCM, operation.

For example, the input current I_{in,meas} may be measured using a shunt resistor (not shown in FIG. 2) and compared to the reference value I_{in,ref} to generate the control error e.

A constant input current may be maintained by varying the 'on time', i.e. DT, of the switch 105, S. The 'off time' (1 - D)T may be determined by a comparator triggering; the the switch 105, S is turned on again when the first rectifying component 103, D₀ stops conducting (current has decayed to 0A) and the anode resonates towards 0V, this corresponds with the Valley Switching technique. When the anode has resonated below a threshold, it triggers a comparator on the control circuit 110 to set the duty cycle signal D high.

Boundary conduction mode (or critical conduction mode) as used herein may refer to an operation wherein the next switching cycle begins as soon as the inductor current drops to zero.

Valley switching as used herein may refer to the natural resonance between the parasitic output capacitance Cₒₛₛ of the switch 105, S - a discrete resonant capacitance 106, C_{R}, if present, and the parasitic capacitance of diode 103, D₀ - and the magnetising inductance L_{mag}, once the magnetising current has decayed to zero, to reduce the output voltage V_{DS} of the switch 105, S to zero before turn on, allowing zero-voltage switching, ZVS, on turn on and thereby reducing switching losses of the converter 1.

FIGs. 3, 4 illustrate various waveforms of the LED converter 1 of FIG. 2.

In particular, the converter 1 includes a 2.2uH coupled inductor at 30V, 1.5W out.

In FIG. 3, real waveforms of the PWM signal D, the anode voltage Vₐ and a secondary winding current I_{N2} are shown.

In FIG. 4, real waveforms of the PWM signal D, the FET voltage V_{DS}, and the primary winding (input) current I_{N1} are shown.

The resonant components resonate for the full magnetising inductor discharging period before valley switching recovers the energy from the resonant capacitor. This can enable higher parallel (resonant) capacitance values on the switch 105, S to further mitigate switching loss, without losing the energy during turn on.

Furthermore, a resonance between a (high) leakage/resonant inductance 104 and the parasitic capacitance of the output diode 103, D₀ may emerge. Upon a switch-off of the diode 103, D₀, the energy in its parasitic capacitance is transferred to the resonant/leakage inductance 104. This then causes large oscillations which result in a voltage stress on the diode 103, D₀ of up to double the rated voltage. This therefore causes reverse leakage current losses and ESR losses. To fix this issue, a secondary winding clamp circuit (a.k.a. *"switched capacitor cell", "switched capacitor diode clamp")* may be used which includes a switched capacitor (i.e., the first capacitance 102, C_{sw}). This series capacitor prevents resonance between the parasitic capacitance of the output diode 103, D₀ and the resonant/leakage inductance 104, as its value is much larger and therefore fixes the voltage seen at the anode of the output diode. The diode clamp (i.e., the second rectifying component 107, D_{sw}) charges the switched capacitor 102, C_{sw} during the on- period of the switch 105, S, as the coupled inductor 101 acts in forward mode. The voltage is approximately constant, however charges during the on-period of the switch 105, S, and discharges during the off-period of the switch 105, S, in series with the coupled inductor 101 to the load. The output voltage Vₒᵤₜ may be determined by the input voltage Vᵢₙ and coupled inductor turns ratio N₂/N₁. In addition to preventing oscillations, this clamp can absorb energy from the resonant/leakage inductance 104 which would otherwise be dumped onto the switch 105, S causing overshoot and exacerbating switching losses. Therefore, this secondary winding clamp circuit reduces switching losses.

FIG. 3 also demonstrates the charging current of the switched capacitor while the switch 105, S is on, as the secondary winding current I_{N2} swings negative during the early part of the switch 105, S being turned on.

To maintain the BCM operation, an anode voltage signal Vₐ may be compared (by the control circuit 110) with a threshold to detect a falling edge, in which case the control circuit 110 truncates the PWM period and turns the switch 105, S back on.

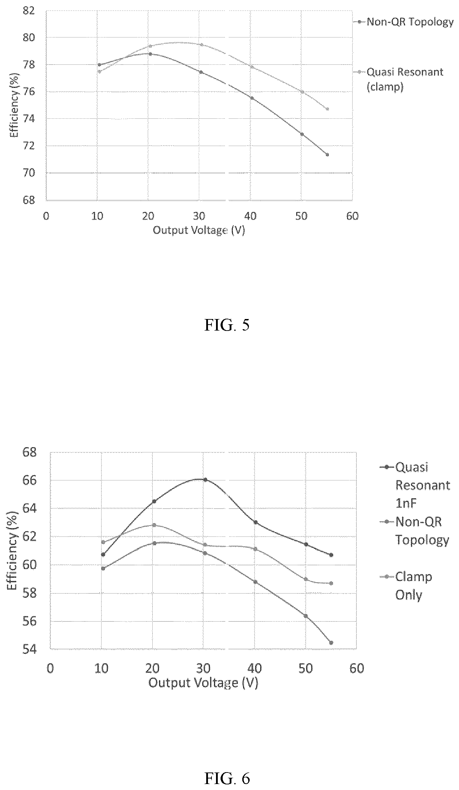

FIGs. 5, 6 illustrate efficiency benefits of the switched capacitor clamp circuit 102, 107 and resonant capacitor 106 in the LED converter 1 of FIG. 2.

In FIG. 5, the efficiency benefit of the proposed resonant topology (using a 2.2uH Bournes SRF1280 coupled inductor, operating at 360 - 580 kHz) over the basic tapped-inductor boost converter topology is demonstrated.

The 'Non-QR topology' curve is simply the basic tapped Inductor Boost converter operating with Valley Switching in BCM. The 'Quasi Resonant (clamp)' curve refers to the topology in FIG. 2 including the switched capacitor clamp, but without any discrete capacitance or inductance added. Itis simply the leakage inductance acting as element 104, , and element 106 is not present. The resonant capacitance is simply that of the parasitic capacitance of 105. As visible, there is a 3% efficiency boost at the highest output voltage.

In FIG. 6, results are presented for a 1uH air core, PCB copper trace winding based coupled inductor, operating at 650 - 800 kHz. This features substantial leakage inductance. The 'Quasi Resonant InF' curve refers to the topology in FIG. 2 with a 1nF discrete capacitor 106 (C_{R}) added in parallel to the parasitic output capacitance Cₒₛₛ of the switch 105, S, in addition to the switched capacitor clamp. For all topologies, the leakage inductance is present and acts as the resonant inductor 104. As visible, there is an efficiency benefit of up to 6.2%.

With the 2.2uH inductor, the switched capacitor clamp significantly improves efficiency. The PCB winding-based inductor features high leakage inductance which causes large overshoot without additional resonant capacitance 106, therefore the addition of a 1nF resonant capacitor improves efficiency significantly, on top of the improvement from introducing the clamp.

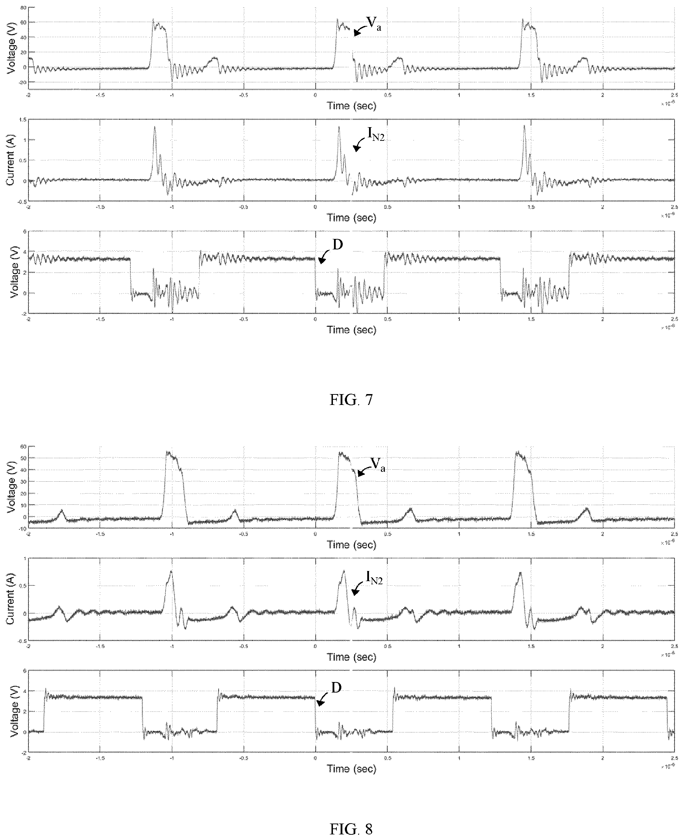

FIGs. 7, 8 illustrate the effectiveness of the secondary winding clamp circuit of FIG. 2 in reducing oscillations.

Due to the high leakage inductance in the PCB winding based inductor, the clamp clearly demonstrates reduction in unwanted oscillation with the output diode capacitance. This is visible comparing FIG. 7 without the clamp and FIG. 8 with the clamp.

## Claims

1. An LED converter (1), comprising
- a boost converter topology, including
- a tapped inductance (101, L_{mag}, N₁, N₂), a first capacitance (102, C_{sw}) and a first rectifying component (103, D₀), arranged in series between an input potential (Vᵢₙ) and an output potential (Vₒᵤₜ) of the converter (1);
- a resonant inductance (104, L_{R}, L_{lkg}) and a switch (105, S), arranged in series between a tap of the tapped inductance (101, L_{mag}, N₁, N₂) and a ground potential of the converter (1);
- a resonant capacitance (106, C_{R}, Cₒₛₛ), arranged in parallel to the switch (105, S); and
- a second rectifying component (107, D_{sw}), arranged in series between the tap of the tapped inductance (101, L_{mag}, N₁, N₂) and a common potential of the first capacitance (102, C_{sw}) and the first rectifying component (103, D₀); and
- a control circuit (110), configured to
- regulate an input current (Iᵢₙ) of the converter (1) in accordance with an input voltage (Vᵢₙ) of the converter (1), a duty cycle signal (D) for the switch (105, S) and winding turns (N₁, N₂) of the tapped inductance (101, L_{mag}, N₁, N₂); and
- generate the duty cycle signal (D) for the switch (105, S) in accordance with a control error (e = I_{in,ref} - I_{in,meas}) of the input current (Iᵢₙ) of the converter (1) and a valley switching in a boundary conduction mode, BCM, operation.

2. The LED converter (1) of claim 1,
the first rectifying component (103, D₀) comprising a diode.

3. The LED converter (1) of claim 1 or claim 2,
the second rectifying component (107, D_{sw}) comprising a diode.

4. The LED converter (1) of any one of the preceding claims,
the resonant inductance (104, L_{R}) comprising one or more of a discrete resonant inductance, and a leakage inductance (L_{lkg}) of the tapped inductance (101, L_{mag}, N₁, N₂).

5. The LED converter (1) of any one of the preceding claims,
the resonant capacitance (106, C_{R}) comprising one or more of: a discrete resonant capacitance, and a parasitic output capacitance (Cₒₛₛ) of the switch (105, S).

6. The LED converter (1) of any one of the preceding claims,
the switch (105, S) comprising a metal oxide semiconductor field effect transistor, MOSFET or a gallium nitride field effect transistor, GaN FET.

7. An emergency LED driver (1, 2), comprising
an LED converter (1) of any one of the preceding claims; and
a battery (2), connected between the input potential (Vᵢₙ) and the ground potential of the LED converter (1).

## Patentansprüche

1. LED-Wandler (1), aufweisend:
- eine Aufwärtswandler-Topologie mit
- einer angezapften Induktivität (101, Lmag, N1, N2), einer ersten Kapazität (102, Csw) und einem ersten Gleichrichtelement (103, Do), die in Reihe zwischen einem Eingangspotential (Vin) und einem Ausgangspotential (Vout) des Wandlers (1) geschaltet sind;
- eine Resonanzinduktivität (104, LR, Llkg) und einen Schalter (105, S), die in Reihe zwischen einer Anzapfung der angezapften Induktivität (101, Lmag, N1, N2) und einem Massepotential des Wandlers (1) angeordnet sind;
- eine Resonanzkapazität (106, CR, Coss), die parallel zu dem Schalter (105, S) angeordnet ist;
- ein zweites Gleichrichtelement (107, Dsw), das in Reihe zwischen der Anzapfung der angezapften Induktivität (101, Lmag, N1, N2) und einem gemeinsamen Potential der ersten Kapazität (102, Csw) und des ersten Gleichrichtelements (103, Do) angeordnet ist; und
- eine Steuerschaltung (110), die konfiguriert ist, den Eingangsstrom (lin) des Wandlers (1) in Abhängigkeit von der Eingangsspannung (Vin) des Wandlers (1), einem Tastverhältnis-Signal (D) für den Schalter (105, S) und den Windungszahlen (N1, N2) der angezapften Induktivität (101, Lmag, N1, N2) zu regeln und das Tastverhältnis-Signal (D) für den Schalter (105, S) in Abhängigkeit von einer Regelabweichung (e = lin,ref - lin,meas) des Eingangsstroms (lin) des Wandlers (1) sowie einem Valley-Schalten im Grenzleitmodus (BCM) zu erzeugen.

2. LED-Wandler (1) nach Anspruch 1, wobei das erste Gleichrichtelement (103, Do) eine Diode aufweist.

3. LED-Wandler (1) nach Anspruch 1 oder 2, wobei das zweite Gleichrichtelement (107, Dsw) eine Diode aufweist.

4. LED-Wandler (1) nach einem der vorhergehenden Ansprüche, wobei die Resonanzinduktivität (104, LR) eine diskrete Resonanzinduktivität und/oder eine Streuinduktivität (Llkg) der angezapften Induktivität (101, Lmag, N1, N2) aufweist.

5. LED-Wandler (1) nach einem der vorhergehenden Ansprüche, wobei die Resonanzkapazität (106, CR) eine diskrete Resonanzkapazität und/oder eine parasitäre Ausgangskapazität (Coss) des Schalters (105, S) aufweist.

6. LED-Wandler (1) nach einem der vorhergehenden Ansprüche, wobei der Schalter (105, S) einen Metall-Oxid-Halbleiter-Feldeffekttransistor (MOSFET) oder einen Galliumnitrid-Feldeffekttransistor (GaN-FET) aufweist.

7. Notfall-LED-Treiber (1, 2), umfassend:
- einen LED-Wandler (1) nach einem der vorhergehenden Ansprüche; und
- eine Batterie (2), die zwischen dem Eingangspotential (Vin) und dem Massepotential des LED-Wandlers (1) angeschlossen ist.

## Revendications

1. Convertisseur à DEL (1) comprenant:
- une topologie de convertisseur élévateur comprenant une inductance à prise intermédiaire (101, Lmag, N1, N2), une première capacité (102, Csw) et un premier élément redresseur (103, Do), disposés en série entre un potentiel d'entrée (Vin) et un potentiel de sortie (Vout) du convertisseur (1) ;
- une inductance résonante (104, LR, Llkg) et un interrupteur (105, S) disposés en série entre une prise de l'inductance à prise intermédiaire (101, Lmag, N1, N2) et un potentiel de masse du convertisseur (1) ;
- une capacité résonante (106, CR, Coss) disposée en parallèle de l'interrupteur (105, S) ;
- un second élément redresseur (107, Dsw) disposé en série entre la prise de l'inductance à prise intermédiaire (101, Lmag, N1, N2) et un potentiel commun à la première capacité (102, Csw) et au premier élément redresseur (103, Do) ; et
- un circuit de commande (110) configuré pour réguler le courant d'entrée (lin) du convertisseur (1) en fonction de la tension d'entrée (Vin) du convertisseur, d'un signal de rapport cyclique (D) destiné à l'interrupteur (105, S) et du nombre de spires (N1, N2) de l'inductance à prise intermédiaire (101, Lmag, N1, N2), et pour générer le signal de rapport cyclique (D) destiné à l'interrupteur (105, S) en fonction d'un écart de régulation (e = lin,ref - lin,meas) du courant d'entrée (lin) du convertisseur (1) ainsi que d'une commutation au point de vallée en mode de conduction limite (BCM).

2. Convertisseur à DEL (1) selon la revendication 1, le premier élément redresseur (103, Do) comprenant une diode.

3. Convertisseur à DEL (1) selon la revendication 1 ou 2, le second élément redresseur (107, Dsw) comprenant une diode.

4. Convertisseur à DEL (1) selon l'une quelconque des revendications précédentes, l'inductance résonante (104, LR) comprenant une inductance résonante discrète et/ou une inductance de fuite (Llkg) de l'inductance à prise intermédiaire (101, Lmag, N1, N2).

5. Convertisseur à DEL (1) selon l'une quelconque des revendications précédentes, la capacité résonante (106, CR) comprenant une capacité résonante discrète et/ou une capacité parasite de sortie (Coss) de l'interrupteur (105, S).

6. Convertisseur à DEL (1) selon l'une quelconque des revendications précédentes, l'interrupteur (105, S) étant un transistor à effet de champ métal-oxyde-semiconducteur (MOSFET) ou un transistor à effet de champ en nitrure de gallium (GaN FET).

7. Pilote de DEL de secours (1, 2) comprenant:
- un convertisseur à DEL (1) selon l'une quelconque des revendications précédentes ; et
- une batterie (2) connectée entre le potentiel d'entrée (Vin) et le potentiel de masse du convertisseur à DEL (1).
